**Europäisches Patentamt**

**European Patent Office**

**Office européen des brevets**

(11) Publication number: **0 119 029**
**A2**

(12) **EUROPEAN PATENT APPLICATION**

(21) Application number: **84301229.5**

(22) Date of filing: **24.02.84**

(51) Int. Cl.³: **B 29 F 3/03**

(30) Priority: **14.03.83 GB 8306947**

(43) Date of publication of application:
**19.09.84 Bulletin 84/38**

(84) Designated Contracting States:
**AT BE CH DE FR GB IT LI LU NL**

(71) Applicant: **IMPERIAL CHEMICAL INDUSTRIES PLC Imperial Chemical House Millbank London SW1P 3JF(GB)**

(72) Inventor: **Lafeber, André Zwernig Strasse 3 D-6909 Muelhausen(DE)**

(74) Representative: **Robertson, Michael Mundie et al, Imperial Chemical Industries PLC Legal Department: Patents Po Box 6 Welwyn Garden City Herts, AL7 1HD(GB)**

(54) **Vented screw pump for thermoplastic polymers.**

(57) An improved vented screw pump and process are provided for venting and pumping molten thermoplastic polymers such as nylon 6,6 by which the extent of polymer degradation and gel formation is greatly reduced. The vented screw pump is characterised by the combination of an annular channel (13, 14) through which molten polymer is fed into a vent chamber (6) and whereby the molten polymer is caused to flow as an annular film down the wall of the vent chamber and a screw (2) located below the vent chamber, the vent chamber (6) being provided with wiper (15) to wipe the molten polymer from the wall of the vent chamber (6). Preferably the screw (2) is operated in a vertical position, is driven from its lower end and has the wiper (15) mounted on its upper end.

EP 0 119 029 A2

./...

Fig.2.

VENTED SCREW PUMP FOR THERMOPLASTIC POLYMERS

This invention relates to an apparatus and process for venting and pumping molten thermoplastic polymers, especially polymers which give rise to degradation such as nylon 6,6.

Vented extruders are frequently used for melting polymers in the production of shaped articles formed from thermoplastic polymers. Some polymers, especially nylon 66, when so processed give rise to gel formation in the vent zone, requiring frequent cleaning of the extruder. If cleaning is not carried out regularly, gel can break loose and subsequently affect the running performance of synthetic fibre melt spinning and plastic moulding processes and/or reduce the quality of the product. This problem can arise with vented extruders having an internal or external bypass and also with "straight through" vented extruders.

The conventional vented extruders can also give rise to further problems of control and processing due to the additional repressurising of the molten polymer after venting. These problems are due to the use of a single screw having along its length three separate sections for the melting of the polymer, venting of the molten polymer, and repressurisation of the molten polymer prior to extrusion. Fluctuations of the volume of the melt in the venting zone accelerate gel formation, thereby presenting a problem to set a safe but economic cleaning routine for the extruder.

We have now designed a vented construction in which the extent of polymer degradation and gel formation is greatly reduced.

According to one aspect of the invention there is provided an improved vented screw pump for molten thermoplastic polymer having a means for feeding molten polymer into a vent chamber and a screw for removing the molten polymer from the vent chamber and pressurising it characterised by the combination of an annular channel (13, 14) through which the molten polymer is fed into the vent chamber (6) and whereby the molten polymer is caused to flow as an annular film down the wall of the vent chamber and a screw (2) located below the vent chamber, the vent chamber (6) being provided with a wiper (15) to wipe the molten polymer from the wall of the vent chamber (6).

2

According to a further aspect of the invention there is provided an improved process for venting and pumping molten thermoplastic polymer wherein molten polymer is fed under pressure into a vent chamber from which it is removed and pressurised by a screw characterised by causing the molten polymer to flow as an annular film down the wall of the vent chamber (6), wiping the molten polymer from the wall of the vent chamber and pumping the molten polymer from the base of the vent chamber by a screw (2) located below the vent chamber.

The screw for removing the molten polymer from the base of the vent chamber may be operated in a vertical or a horizontal position. In a preferred embodiment of the invention, the screw is operated in a vertical position and is driven from its lower end. In this embodiment, the wiper for wiping molten polymer from the wall of the vent chamber is preferably mounted on the upper end of the screw.

In the embodiment in which the screw is vertical and driven from its lower end and the wiper is fixed to the upper end of the screw, the present invention provides a surprisingly gel-free vent chamber unobstructed by a drive shaft.

Preferably, the vent chamber has a sensing device associated therewith to detect the level of molten polymer in the chamber. The sensing device is used to control the feed rate of molten polymer into the vent chamber. In order to avoid gel formation resulting from accumulation of polymer on the sensing device, it is preferred that the sensing device is of a non-contact type, for example radioactive or ultrasonic.

When the screw is operated in a vertical position the screw may be driven at its lower end by an electric motor. In this embodiment the polymer is preferably wiped from the wall of the vent chamber by a wiper comprising a blade or a number of blades mounted on the upper end of the screw. When the screw is operated in a horizontal position, the screw may be driven at one end by an electric motor. In this embodiment the wiper is operated through a drive shaft mounted on the upper end of the vent chamber.

Preferably the wiper is stream lined and provided with a special surface coating to reduce gel formation of the polymer. It may be so shaped that it wipes the polymer away from the wall of the vent chamber and pushes it downwards along the blade towards the screw. Desirably the wiper blade has only a small surface area, especially in the region where the shear rate of the polymer falls to zero.

The vented screw pump may be fed with molten polymer produced by for example a non-vented screw extruder.

Embodiments of the invention will now be described by way of example which reference to the accompanying drawings in which:

Figure 1 is a diagrammatical sectional view of a vented screw pump according to the present invention and

Figure 2 is a diagrammatical view partly in section of a vent chamber suitable for use in the present invention.

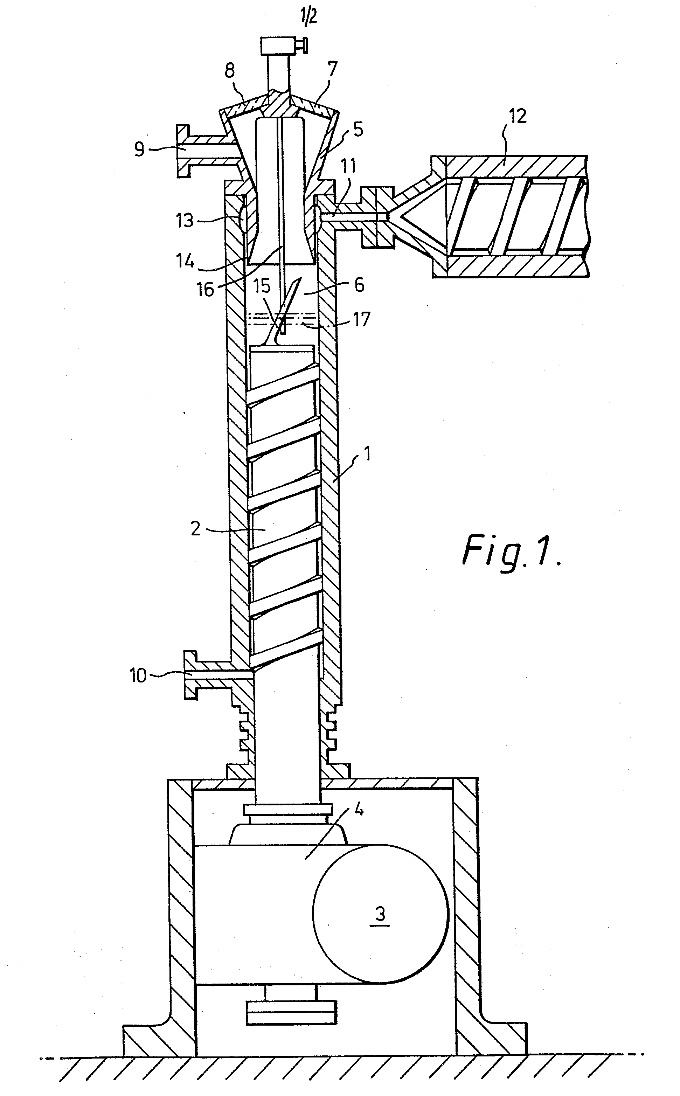

Referring to Figure 1 of the drawings, a vented screw pump according to the invention comprises a vertical barrel 1 in which is mounted a screw 2 driven by an electric motor 3 via a gear box 4. The length of the screw is 10 to 12 times its diameter. Above the screw and bounded by the walls of the barrel 1 and a housing 5 is a vent chamber 6. The housing comprises two viewing glasses 7 and 8, and a port 9 for connection to a vacuum source. The lower part of the barrel has an exit port 10 for molten polymer, and is connected to a means not shown for the shaping of the polymer, eg a spinneret for the production of fibres. The upper part of the barrel has an entrance port 11 for the introduction of molten polymer produced by a conventional non-vented screw extruder 12. The entrance port 11 communicates with an annular feed channel 13 formed between the inner wall of the barrel 1 and the outer wall of the housing 5. The channel 13 leads to an annular gap 14 of less than 1 mm width formed between the inner wall of the barrel 1 and the outer wall of the housing 5. A streamlined, angled wiper blade 15 of small surface area is mounted on the upper end of the screw 2. A conventional means 16 for detecting the level of the molten polymer in the vent chamber 6 is mounted in the housing 5. It is connected to a control means not shown which adjusts the speed of rotation of the screw of the non-vented extruder 12 so that the level of the molten polymer in the vent chamber remains substantially constant and does not vary with the demand for molten polymer made on the vented screw pump.

In use, molten polymer is produced in a conventional manner by the non-vented extruder 12, and flows under pressure through the entrance port 11 into the annular feed channel 13. From this channel the polymer flows through the annular gap 14 at high shear into the vent chamber 6, and down the inner wall of the barrel as a film having a thickness of less than 1 mm. Moisture and any other volatile material contained in the molten polymer is released into the vent chamber 6 which has a reduced pressure, and escapes via the port 9. Before the shear rate of the polymer falls below a value at which gel formation could occur as it flows down the inner wall of the barrel 1, it is wiped from the wall and forced downwards along the angled blade 15 towards the screw 2. The level of the molten polymer 17 in the vent chamber 6 is maintained constant by the level detecting means 16, when necessary adjusting the speed of rotation of the screw in the non-vented screw extruder 12. The screw 2 takes molten polymer from the vent chamber 6, pressurises it, and forces it out through the exit port 10 to a polymer shaping means not shown. The pressure of the molten polymer leaving the exit port 10 may be monitored, and any variation thereof producing a signal which adjusts the speed of the drive motor 3, and consequently the speed of the screw 2, thereby maintaining constant pressure of the exiting molten polymer.

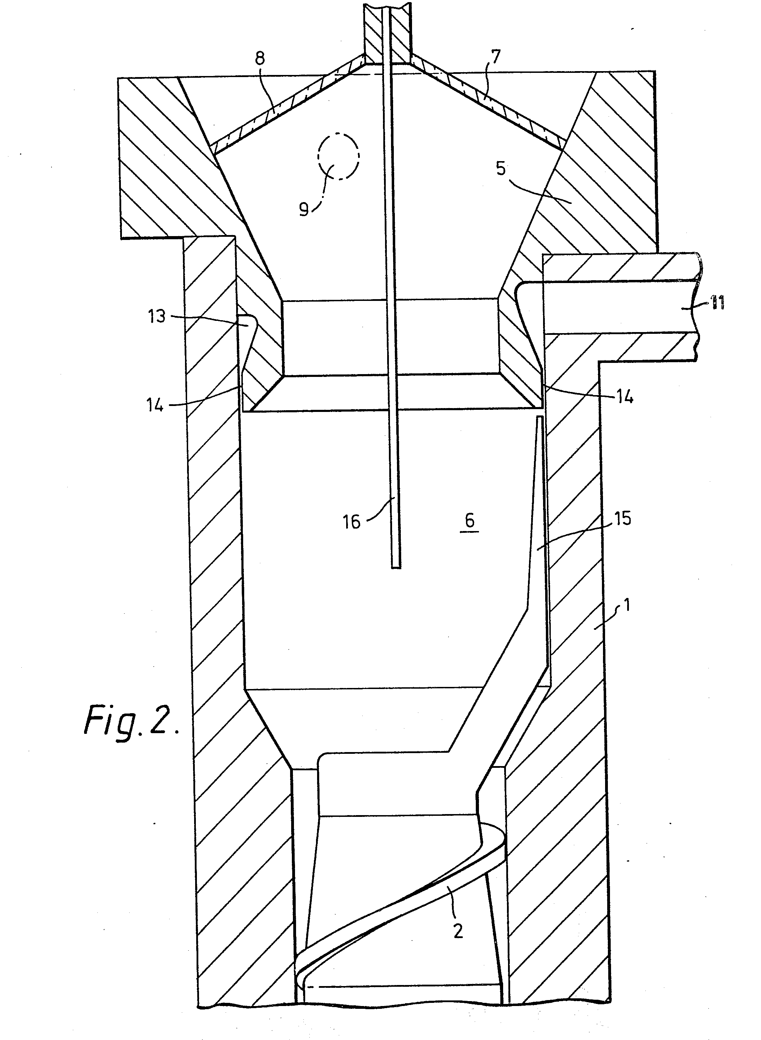

Referring to Figure 2, a vent chamber 6 is formed by a vertical barrel 1 and a housing 5. The barrel 1 tapers internally at its lower end in which is mounted a vertical screw 2. Screw 2 is driven from its lower end and is provided at its upper end with a wiper 15 to wipe molten polymer from the wall of the vent chamber 6. The part of wiper 15 which wipes the chamber wall tapers towards its upper end and is shaped as part of a helix. The vent chamber has viewing windows 7, 8, a venting exhaust port 9 for connection to a vacuum source and is provided with a sensor 16 for detecting the level of molten polymer in the vent chamber 6. Inlet conduit 11 for molten polymer communicates with an annular channel comprising annular conduit 13 and annular gap 14 which are shaped such that the molten polymer is caused to flow as a uniform thin annular film down the wall of chamber 6. The flow of molten polymer as a thin film results in very efficient venting.

MMR/NDW

CLAIMS:

1. An improved vented screw pump for molten thermoplastic polymer having a means for feeding molten polymer into a vent chamber and a screw for removing the molten polymer from the vent chamber and pressurising it characterised by the combination of an annular channel (13, 14) through which the molten polymer is fed into the vent chamber (6) and whereby the molten polymer is caused to flow as an annular film down the wall of the vent chamber and a screw (2) located below the vent chamber the vent chamber (6) being provided with a wiper (15) to wipe the molten polymer from the wall of the vent chamber (6).

2. A vented screw pump according to claim 1 wherein the screw is operated in a vertical position and is driven from its lower end.

3. A vented screw pump according to claim 2 wherein the wiper is mounted on the upper end of the screw.

4. A vented screw pump according to claim 1 wherein the screw is operated in a horizontal position.

5. A vented screw pump according to any one of the preceding claims having a sensing device to detect the level of molten polymer in the vent chamber.

6. A vented screw pump according to claim 5 wherein the sensing device is of a non-contact type.

7. A vented screw pump according to any one of the preceding claims wherein the wiper is shaped such that it pushes the wiped polymer downwards along the wiper towards the screw.

8. A synthetic fibre melt-spinning machine incorporating a vented screw pump according to any one of the preceding claims.

9. An improved process for venting and pumping molten thermoplastic polymer wherein molten polymer is fed under pressure into a vent chamber from which it is removed and pressurised by a screw characterised by causing the molten polymer to flow as an annular film down the wall of the vent chamber (6), wiping the molten polymer from the wall of the vent chamber and pumping the molten polymer from the base of the vent chamber by a screw (2) located below the vent chamber.

10. A process according to claim 9 wherein the screw is operated in a vertical position and is driven from its lower end.

0119029

Fig.1.

0119029

2/2

Fig.2.